# EUROPÄISCHE PATENTSCHRIFT

(11) **EP 2 564 145 B1**
(45) Veröffentlichungstag und Bekanntmachung des Hinweises auf die Patenterteilung: **08.01.2020**
(21) Anmeldenummer: 11717489.6
(22) Anmeldetag: 19.04.2011
(51) Int. Cl.: F41C 33/06, B60P 7/16, B60R 7/00, F41H 7/04

(54) **TRANSPORTTASCHE INSBESONDERE FÜR DEN FAHRZEUGEINBAU**
TRANSPORTATION BAG, IN PARTICULAR FOR INSTALLATION IN A VEHICLE
SAC DE TRANSPORT DESTINÉ EN PARTICULIER À ÊTRE INSTALLÉ DANS UN VÉHICULE

(30) Priorität: 24.04.2010 DE 102010018136
(43) Veröffentlichungstag der Anmeldung: 06.03.2013
(73) Patentinhaber: Rheinmetall Landsysteme GmbH, 29345 Unterlüß (DE)
(72) Erfinder: ZEISE, Ralf, 24105 Kiel (DE); BÖCKMANN, Frank, 24623 Brokenlande (DE); HASS, Frank, 24226 Heikendorf (DE); KOCH, Ralf, 24232 Schönkirchen (DE)
(74) Vertreter: Dietrich, Barbara
(86) Internationale Anmeldenummer: PCT/EP2011/001995
(87) Internationale Veröffentlichungsnummer: WO 2011/131351

(56) Entgegenhaltungen:
- EP-A1- 1 972 491
- DE-B3-102004 060 791
- GB-A- 191 104 342
- US-A- 3 744 687
- US-A- 4 024 997
- US-A- 4 369 904
- US-B1- 6 279 799
- WAGNER H J: "Transportpanzer Fuchs Minen- und IED-Schutz", STRATEGIE UND TECHNIK, REPORT VERLAG GMBH, DE, Bd. 51, Nr. 5, 1. Mai 2008 (2008-05-01), Seiten 52-53, XP001515432, ISSN: 1860-5311
- OGORKIEWICZ R M: "Shaping up for the fight:vehicle design responses to challenge of mine warfare", JANE'S INTERNATIONAL DEFENCE REVIEW, JANE'S INFORMATION GROUP, COULSDON, SURREY, GB, Bd. 42, Nr. 4, 1. April 2009 (2009-04-01), Seiten 60-61,63,65, XP001549911, ISSN: 1476-2129 & DE 103 41 483 B3 (AUTOFLUG GMBH [DE]) 17. März 2005 (2005-03-17)

## Beschreibung

Die Erfindung beschäftigt sich mit einer Transporttasche für den Einbau in ein Fahrzeug, insbesondere um eine gegen Minenansprengungen geschützte Transporttasche für eine Waffe und / oder anderer Gegenstände und Zubehör.

Tragetaschen, auch Gewehrfutterale, sind beispielsweise aus der DE 20 2007 0107 807 U1 bekannt. Das Futteral besteht dabei aus einem längenverstellbaren Basiskörper und einer damit verbindbaren Haube. Getragen wird das Futteral mittels eines Riemens.

Ein Tragevorrichtung für Langwaffen offenbart die DE 202 12 810 U1, die als eine Art Reisetasche ausgebildet ist. Gleiche Thematik umfasst die DE 102 38 157 C1. Eine kastenartige Vorrichtung zur Aufbewahrung etc. von Langwaffen beansprucht die DE 120 38 155 C1. Eine Schießsport-Tragetasche wird mit der DE 200 03 209 U1 beschrieben, die Aufnahmen zum lösbaren Befestigen eines Gewehrkoffers sowie anderer Schießsportgegenstände besitzt. Mit einer Rückentragetasche für Biathleten beschäftigt sich die DE 93 09 451 U1.

Aktuelle Militär- und Befriedungseinsätze sind unterschiedlichen Bedrohungen ausgesetzt. Eine der Hauptbedrohungen stellen Minen dar. Diese führen zu starken Erschütterungen in angesprengten Fahrzeugen. Zum Schutz der Insassen müssen daher Gegenstände, die im Fahrzeug mitgeführt werden, besonders gesichert werden, da ungesicherte Gegenstände eine hohe Beschleunigung erfahren und zu Sekundärgeschossen werden können. In einem oder mehreren Haltern befestigte Gegenstände können durch die einwirkenden Kräfte brechen, verformt werden, ihren Halt verlieren etc.

Bekannt sind beispielsweise so genannte offene Waffensäcke (z. B. für den PUMA), fest eingebaute, geschlossene Aufbewahrungs- und Transportbehälter sowie Staufächer oder Taschen mit fester Form für den jeweiligen Transportgegenstand etc.

Der offene Waffensack bietet seinerseits keinen sicheren Halt der Waffe, wenn diese bricht oder sich Teile von der Waffe lösen. Geschlossene Aufbewahrungs- und Transportbehälter sind üblicher Weise mit einem Handgriff ausgestattet, nicht aber mit Befestigungen für die Einbindung in einem Fahrzeug. Daher müssen derartige Behälter zusätzlich gesichert werden. Fest eingebaute Behälter beanspruchen einen vorgegebenen Platz im Fahrzeug, auch wenn diese nicht wirklich genutzt werden.

Aus der CA 2 363 195 C ist eine Vorrichtung zur Befestigung an einer Basis bekannt. Eine weitere Halterung zur Aufnahme einer Waffe beschreibt die CA 2 534 230 A.

Eine Halterung für Langwaffen in Fahrzeugen ist des Weiteren der DE 90 16 229 U1 entnehmbar. Dieser zeichnet sich dadurch aus, dass er auf seiner Frontseite aus einem Haltestück mit Laufmulde und Sicherungsriemen und auf seiner Rückseite aus zwei Klemmplatten besteht.

Eine weitere Vorrichtung für die Einbindung in ein Fahrzeug ist Gegenstand von DE 203 12 078 U1. Der Halter ist dabei an einem Sitz eines Personenfahrzeugs über ein Befestigungsteil befestigbar. Das Befestigungsteil weist eine Öffnung zur Aufnahme einer Strebe einer Kopfstütze auf.

Die US 5,683,021 A schlägt ihrerseits einen Einbau einer Halterung zur Aufnahme einer Waffe oberhalb von Sitzen vor, während die DE 10 2005 034 328 A eine Einbindung der Waffe neben dem Sitz vorsieht. Eine versperrbare Halterung zeigt EP 0 984 242 A auf.

Hier stellt sich die Erfindung die Aufgabe, eine Transporttasche für Gegenstände, insbesondere eine sogenannte Waffentasche aufzuzeigen, die derart im Fahrzeug eingebunden ist, dass speziell bei einer Mineneinwirkung auf ein Objekt nicht nur die Waffe oder den Inhalt der Transporttasche sondern auch eine Besatzung schützt.

Gelöst wird die Aufgabe durch die Merkmale des Patentanspruchs 1. Vorteilhafte Ausführungen sind in den Unteransprüchen aufgeführt.

Der Erfindung liegt die Idee zugrunde, die Waffe oder einen Gegenstand in einer geschlossenen Tasche (Transporttasche) einzubringen, die die Waffe bzw. den Gegenstand komplett umschließt, und diese dann beispielsweise im Fahrzeuginneren aufzuhängen.

Die Nutzung von Gurten als Befestigungsmöglichkeiten für Waffenbehälter als solche ist aus der US 7,066,366 B2 bekannt. Der Waffenbehälter ist seitlich an einem Allradfahrzeug anbringbar. Der Waffenbehälter besteht aus einem weichen, biegsamen Material, um Waffen mit unterschiedlichen Formen und Typen aufnehmen zu können und wird seinerseits an einer u-förmigen Halterung gelagert, der dann durch Gurte mit Schnallen und Klettverschlüssen mit dieser Halterung verbunden wird. Weitere Gurte dienen zum Verschließen des Behälters.

Die US 6,279,799 B1 betrifft eine transportable, abnehmbare Kombination eines Waffenbehälters und eines Waffenbaugruppenträgers für ein Fahrzeug. Einstellbare Gurte mit rastenden Schnallen realisieren eine starre Befestigung im Fahrzeug. Der Waffenbehälter selbst besteht aus einem gewebeartigen Material. Dadurch können verschiedene Waffen im Behälter transportiert werden. Das Behältnis verfügt über flexible Klettstreifen, die gelöst werden, wenn die Waffe in den Behälter hineingelegt oder diesem entnommen wird.

Die US 2008/0047992 A1 beschäftigt sich mit einem am Fahrzeugsitz montierten Bogenhalter. Dieser ist über Bänder und Gurte mit der Lehne (Schultern) oder der Kopfstütze verbunden.

Im Gegensatz zu derartige starren oder festen Befestigungen am Sitz oder Fahrzeug wird nunmehr die Transporttasche Schock entkoppelt befestigt, bei einer Minenansprengung zu gewährleisten, dass diese nicht auf den Inhalt der Transporttasche einwirkt. Als Befestigung sind Gurtbänder, Ketten, Riemen etc. denkbar. Die übertragen ihrerseits nur Zugkräfte.

Durch die Flexibilität der Befestigung erfolgt keine Beschädigung der Befestigungselemente aufgrund von Ansprengungen, Mineneinwirkung, sondern zu einer Verschiebung der fahrzeugseitigen Befestigungspunkte.

Die Riemen, Gurtbänder etc. sind ihrerseits längenverstellbar und beispielsweise mit Hilfe von Klettverschlüssen, Haken oder dergleichen in den neuen Längen fixierbar. Die Längenvariation hat den Vorteil, dass die Tasche nicht nur in unterschiedlichen Fahrzeugen, Containern oder anderen Objekten eingebunden werden kann, sondern, dass die Fixierpunkte in unterschiedlichen Höhen im Fahrzeug etc. festgelegt werden zu können. Dies kann dann wiederum dazu führen, dass die Tasche sicherer bzw. fester verzurrt werden kann, da ein Schaukeln der Tasche vermieden wird.

Die Tasche selbst zeichnet sich dadurch aus, dass die Form dem Gewehr und / oder Gegenstand weitgehend angepasst ist, um den Bewegungsspielraum der Waffe bzw. des Gegenstandes in der Tasche zu verringern und damit Beschädigungen zu verhindern. Das Material der Tasche ist selber unzerbrechlich und kann auch in Richtung zerreißfestes Gewebe gehen. So sind des Weiteren die Verwendung von Textilen, undurchsichtige oder durchsichtige Folien aber auch Netzgewebe etc. möglich. Als bevorzugt hat sich gezeigt, wenn die Tasche einen aufklappbaren Deckel besitzt, der einerseits mit Klettverschlüssen oder anderen Verschlüssen versehen die Tasche, zumindest aber einen Teilbereich, komplett verschließt. Dieser Deckel sollte die Entnahme der Waffe und / oder anderer in der Tasche befindlicher Teile auch im sogenannten hängenden Zustand im Fahrzeug ermöglichen. Bevorzugt wird ein überlappender Deckel, damit eine dichte Halterung gegen Staub, Feuchtigkeit, Dreck etc. von außen und gegenüber Teilen des zu transportierenden Gegenstands im Falle einer Beschädigung des Gegenstands von innen realisiert werden kann. Die Tasche weist neben einem möglichen Trageriemen vorzugsweise drei weitere Riemen, Gurtbänder, Ketten etc. auf, über die die Tasche an fahrzeugseitigen Ösen, Vorsprüngen etc. befestigt und vorgespannt werden kann. Diese können sich in der bevorzugten Ausführung im Bereich eines Mannschaftsfahrzeugsitzes befinden, sodass die Waffentasche sich in unmittelbarer Nähe neben dem Besatzungsmitglied, dem Fahrer wie auch Beifahrer befindet und somit die Waffe bzw. der Inhalt der Tasche schnell einsatzbereit ist.

Es versteht sich, dass die Waffentasche auch andere Gegenstände aufnehmen kann, insbesondere dann, wenn diese in Form einer Waffe ähnlich sind. Auch können andere oder weitere, auch militärische, Gegenstände in die Tasche eingebunden werden, wozu die Tasche bevorzugt zusätzliche Aufnahmen aufweisen sollte. Diese Gegenstände können beispielsweise Irritationskörper, Handgranaten etc. sein. Aber auch Zusatzeinrichtungen für eine Waffe sind in die Tasche integrierbar.

Anhand eines Ausführungsbeispiels mit Zeichnung soll die Erfindung näher erläutert werden. Es zeigt:
- Fig. 1: eine Transporttasche mit geschlossenem Deckel,
- Fig. 2: die Transporttasche aus Fig. 1 mit einem darin befindlichen Gewehr,
- Fig. 3: eine Schock entkoppelte Einbindung der Transporttasche im Fahrzeug,
- Fig. 4: eine Vergrößerung der Schock entkoppelten Anbindung der Transporttasche am Fahrzeugdach.

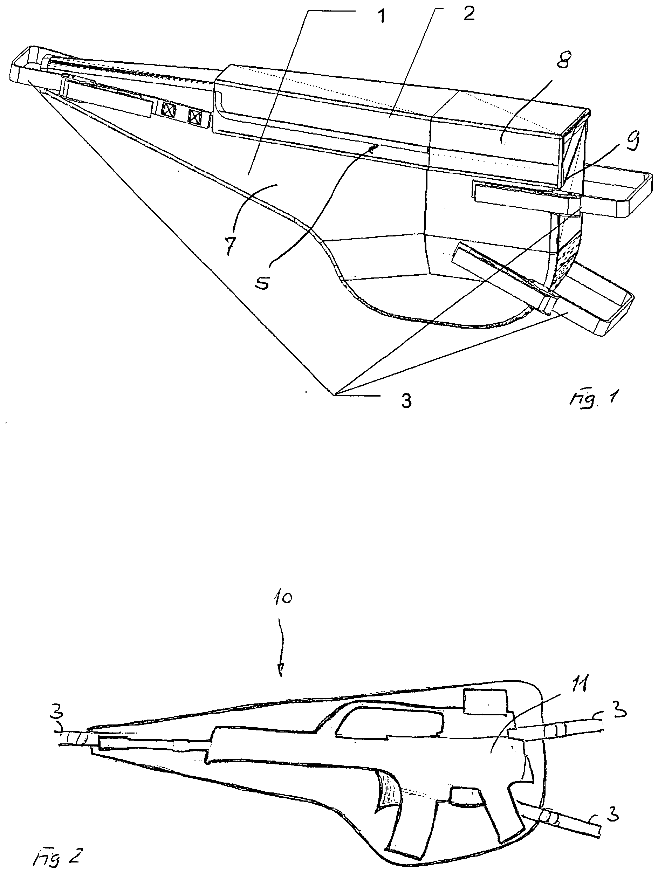

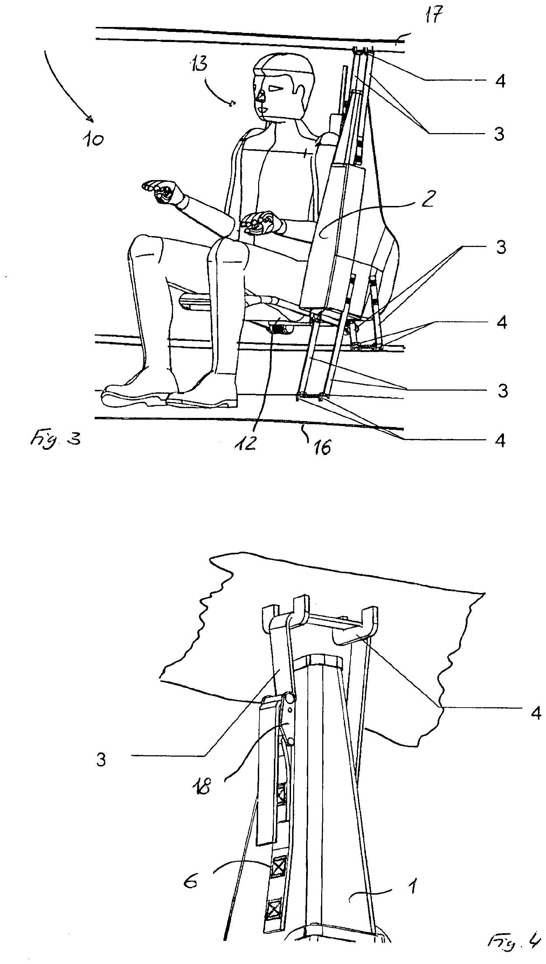

Fig. 1 zeigt einen Waffensack bzw. eine Transporttasche 1 mit einem die Tasche 1 verschließbaren Deckel 2, der zumindest in einem Teilbereich 5 die Tasche vollständig verschließt und so verschlossen werden kann, dass Teile des Inhalts auch nach einer Beschädigung oder Zerstörung nicht nach außen dringen können. Mit 3 sind Befestigungselemente, hier Riemen, gekennzeichnet, die eine Schock entkoppelte Einbindung der Tasche 1 in einem Fahrzeug 10 (teilweise in Fig. 3) ermöglichen. Sicherlich sind bereits zwei Riemen als ausreichend anzusehen, bevorzugt werden aber drei. Die Riemen 3 sind ihrerseits längenverstellbar und können mit Hilfe von Klettverschlüssen 6 oder dergleichen in den neuen Längen fixierbar sein.

Der Deckel 2 ist bevorzugt so ausgestaltet, dass er den Grundkörper 7 im zu verschließenden Teil 5 überlappt. Dieser sich überlappende Teil 8 des Deckels 2 kann durch wenigstens einen Klettverschluss 9 an der Tasche 1 befestigt werden. Alternativen zu einem Klettverschluss sind magnetische Verschlüsse, Reißverschlüsse, Schnallen etc.

Fig. 2 zeigt die Tasche 1 mit einem darin befindlichen Gewehr 11 (Waffe), hier ein G 36.

Die Tasche 1 wird über die Riemen 3 an fahrzeugeigenen Befestigungen 4, wie beispielsweise Ösen, befestigt und vorgespannt (Fig. 3). Hier auch deutlich erkennbar, dass die Fixierung der Tasche 1 einem Fahrzeugsitz 12 anpassbar ist. Der Deckel 2 ist vorzugsweise zu einer Person 13 zugewandt, damit dieser den Inhalt 11 auch in dieser Position leicht und schnell entnehmen kann. Um die Tasche 1 fest spannen zu können, wird der hintere untere Riemen 3 an der Seitenwand befestigt. Der vordere untere Riemen 3 kann seinerseits am Zwischenboden oder dem Fahrzeugboden 16 selbst befestigt werden. Für die Befestigung am Fahrzeugdach 17 zeichnet sich der obere Riemen 3 verantwortlich.

Anhand der oberen Befestigung (Fig. 4) soll die Schockentkopplung erklärt werden.

Die Ösen 4 dienen hier zur Aufnahme des Riemens 3. Dieser ist hier einseitig beispielsweise fest an der Tasche 1 befestigt. An der anderen Seite der Tasche 1 weist diese ein Klemmschloss oder Arretierungsschlaufe 18 auf über die der Riemen 3 gezogen wird. Zur Fixierung des Riemens 3 weist dieser beispielsweise Klettverschlüsse 6 in verschiedenen Teilabschnitten des Riemens 3 auf oder wird fest vernäht.

## Patentansprüche

1. In ein Objekt (10) einbaubare Transporttasche, wobei das Objekt ein Fahrzeug, Container oder dergleichen, welches einer Ansprengung ausgesetzt sein kann, ist, wobei für die Einbindung im Objekt (10) an der Transporttasche (1) Befestigungselemente (3) vorgesehen sind, die an objekteigenen Befestigungspunkten (4) anbindbar sind, derart, dass eine Schock entkoppelte Befestigung der Transporttasche (1) im Objekt (10) erfolgt, wobei die Befestigungselemente (3) Riemen, Gurtbänder, Ketten etc. sind, welche ausschließlich Zugkräfte übertragen, wobei zumindest eine Seite der Transporttasche (1) ein Klemmschloss oder eine Arretierungsschlaufe (18) aufweist, über die einer der Riemen (3) gezogen wird, sodass der Riemen (3) vorgespannt wird, wobei wenigstens zwei, bevorzugt drei Riemen (3) zur Befestigung der Transporttasche (1) vorhanden sind und dass ein hinterer Riemen (3) an einer Seitenwand des Objektes und ein vorderer unterer Riemen (3) an einem Zwischenboden oder einem Objektboden (16) befestigbar sind

2. Transporttasche nach Anspruch 1, **dadurch gekennzeichnet, dass** die Transporttasche (1) in seiner Form der des Inhalts (11) anpassbar ist.

3. Transporttasche nach Anspruch 2, **dadurch gekennzeichnet, dass** die Form der einer Waffe oder einer Waffe ähnlich ist, wobei auch andere oder weitere auch militärische Gegenstände aufnehmbar sind, wie Irritationskörper, Handgranaten und Zusatzeinrichtungen für eine Waffe.

4. Transporttasche nach einem der Ansprüche 1 bis 3, **dadurch gekennzeichnet, dass** zumindest ein Teilbereich (5) der Transporttasche (1) durch einen Deckel (2) abgedeckt ist.

5. Transporttasche nach Anspruch 4, **dadurch gekennzeichnet, dass** der Deckel (2) diesen Teilbereich (5) überlappend ausgeführt ist, wobei zwischen Deckel (2) und Transportasche (1) ein Verschlusselement (9), wie Klettverschluss, Magnetverschluss, Reißverschluss oder dergleichen, eingebunden sein kann.

6. Transporttasche nach einem der Ansprüche 1 bis 5, **dadurch gekennzeichnet, dass** die Riemen (3), Gurtbänder, Ketten etc. ihrerseits längenverstellbar sind und mit Hilfe von Klettverschlüssen, Haken oder dergleichen in den neuen Längen fixierbar sind, wobei die Fixierung der Tasche (1) einem Fahrzeugsitz (12) anpassbar ist.

7. Transporttasche nach einem der Ansprüche 1 bis 6, **dadurch gekennzeichnet, dass** zur Fixierung der Riemen (3) in verschiedenen Teilabschnitten der Riemen (3) Verbindungen (6) aufweist oder der Riemen (3) in diesen Teilabschnitten fest vernäht ist, wobei die Fixierung der Tasche (1) einem Fahrzeugsitz (12) anpassbar ist.

8. Transporttasche nach einem der Ansprüche 1 bis 7 , **dadurch gekennzeichnet, dass** die Fixierpunkte in unterschiedlichen Höhen im Objekt festlegbar sind.

9. Transporttasche nach einem der Ansprüche 1 bis 8, **dadurch gekennzeichnet, dass** die Verbindungen (6) an den Befestigungselementen (3) vorhanden sind.

10. Transporttasche nach Anspruch 7, **dadurch gekennzeichnet, dass** die Verbindungen (6) Klettverschlüsse, Haken oder dergleichen sind, je nach Art der Befestigungselemente (3).

11. Transporttasche nach einem der Ansprüche 1 bis 8, **dadurch gekennzeichnet, dass** die objekteigenen Befestigungspunkte (4) Ösen, Vorsprünge etc. sind.

12. Transporttasche nach einem der Ansprüche 1 bis 9, **dadurch gekennzeichnet, dass** die Transporttasche (1) aus einem unzerbrechlichen Material besteht, wobei das Material Textilen, undurchsichtige oder durchsichtige Folien aber auch Netzgewebe sein kann.

13. Fahrzeug mit einer Transporttasche nach einem der Ansprüche 1 bis 12.

## Claims

1. Transportation bag which can be installed in an object (10), the object being a vehicle, container or the like, which can be exposed to explosive attack, wherein, for incorporation in the object (10), there are fastening elements (3) provided on the transportation bag (1), and said fastening elements can be attached at object-mounted fastening points (4) such that shock-decoupled fastening of the transportation bag (1) in the object (10) takes place, wherein the fastening elements (3) are belts, straps, chains, etc., which transmit exclusively tensile forces, wherein at least one side of the transportation bag (1) has a clamp lock or an arresting loop (18), via which one of the belts (3) is drawn, the belt (3) being prestressed as a result, wherein at least two, preferably three, belts (3) are provided for fastening the transportation bag (1), and a rear belt (3) can be fastened on a side wall of the object and a front, lower belt (3) can be fastened on an intermediate floor or a floor (16) of the object.

2. Transportation bag according to Claim 1, **characterized in that** the shape of the transportation bag (1) can be adapted to that of the contents (11).

3. Transportation bag according to Claim 2, **characterized in that** the shape is that of a weapon or is similar to a weapon, wherein it is also possible to accommodate different items or additional, also military, items, such as irritation members or grenades, hand grenades and additional devices for a weapon.

4. Transportation bag according to one of Claims 1 to 3, **characterized in that** at least one sub-region (5) of the transportation bag (1) is covered by a cover (2).

5. Transportation bag according to Claim 4, **characterized in that** the cover (2) is designed to overlap said sub-region (5), wherein a closure element (9), such as a touch-and-close fastener, magnetic closure, zip or the like, can be incorporated between the cover (2) and transportation bag (1).

6. Transportation bag according to one of Claims 1 to 5, **characterized in that** the belts (3), straps, chains, etc., for their part, are length-adjustable and can have the new lengths fixed with the aid of touch-and-close fasteners, hooks or the like, wherein the fixing of the pocket (1) can be adapted to a vehicle seat (12).

7. Transportation bag according to one of Claims 1 to 6, **characterized in that**, for the purpose of fixing the belts (3), various sub-portions of the belt (3) have connections (6) or said sub-portions of the belt (3) are sewn firmly, wherein the fixing of the pocket (1) can be adapted to a vehicle seat (12).

8. Transportation bag according to one of Claims 1 to 7, **characterized in that** the fixing points can be secured in the object at different heights.

9. Transportation bag according to one of Claims 1 to 8, **characterized in that** the connections (6) are present on the fastening elements (3).

10. Transportation bag according to Claim 7, **characterized in that** the connections (6) are touch-and-close fasteners, hooks or the like, depending on the type of fastening element (3).

11. Transportation bag according to one of Claims 1 to 8, **characterized in that** the object-mounted fastening points (4) are eyelets, protrusions, etc.

12. Transportation bag according to one of Claims 1 to 9, **characterized in that** the transportation bag (1) consists of an indestructible material, wherein the material can be made of textiles, non-transparent or transparent films or also mesh fabrics.

13. Vehicle having a transportation bag according to one of Claims 1 to 12.

## Revendications

1. Poche de transport pouvant être montée dans un objet (10), l'objet étant un véhicule, un conteneur ou similaire susceptible d'être exposé à un impact, des éléments de fixation (3) étant prévus au niveau de la poche de transport (1) pour l'intégration dans l'objet (10), les éléments de fixation pouvant être reliés à des points de fixation (4) propres à l'objet de manière à effectuer une fixation, découplée du choc, de la poche de transport (1) dans l'objet (10), les éléments de fixation (3) étant des courroies, des sangles, des chaînes, etc., qui ne transmettent que des efforts de traction, au moins un côté de la poche de transport (1) comportant un verrou de serrage ou une boucle d'arrêt (18) permettant de tirer l'une des courroies (3) de manière à serrer la courroie (3), au moins deux, de préférence trois, courroies (3) étant prévues pour fixer la poche de transport (1) et une courroie arrière (3) pouvant être fixée à une paroi latérale de l'objet et une courroie inférieure avant (3) pouvant être fixée à un fond intermédiaire ou à un fond d'objet (16).

2. Poche de transport selon la revendication 1, **caractérisée en ce que** la poche de transport (1) peut être adaptée, quant à sa forme, au contenu (11).

3. Poche de transport selon la revendication 2, **caractérisée en ce que** la forme est similaire à celle d'une arme ou à une arme, d'autres éléments militaires ou des éléments militaires supplémentaires peuvent également être reçus, tels qu'un corps irritant, des grenades à main et des dispositifs auxiliaires destinés à une arme.

4. Poche de transport selon l'une des revendications 1 à 3, **caractérisée en ce qu'**au moins une partie (5) de la poche de transport (1) est recouverte par un couvercle (2).

5. Poche de transport selon la revendication 4, **caractérisée en ce que** le couvercle (2) est conçu pour recouvrir cette partie (5), un élément de fermeture (9), tel qu'une fermeture auto-agrippante, une fermeture magnétique, une fermeture à déchirure ou similaire, peut être intégré entre le couvercle (2) et la poche de transport (1).

6. Poche de transport selon l'une des revendications 1 à 5, **caractérisée en ce que** les courroies (3), les sangles, les chaînes, etc. sont à leur tour réglables en longueur et peuvent être fixées avec les nouvelles longueurs au moyen de fermetures auto-agrippantes, de crochets ou similaires, la fixation de la poche (1) pouvant être adaptée à un siège de véhicule (12).

7. Poche de transport selon l'une des revendications 1 à 6, **caractérisée en ce que**, pour fixer la courroie (3) dans différentes portions, la courroie (3) comporte des liaisons (6) ou la courroie (3) est cousue solidement dans ces portions, la fixation de la poche (1) pouvant être adaptée à un siège de véhicule (12).

8. Poche de transport selon l'une des revendications 1 à 7, **caractérisée en ce que** les points de fixation peuvent être fixés à différentes hauteurs dans l'objet.

9. Poche de transport selon l'une des revendications 1 à 8, **caractérisée en ce que** les liaisons (6) sont prévues au niveau des éléments de fixation (3).

10. Poche de transport selon la revendication 7, **caractérisée en ce que** les liaisons (6) sont des fermetures auto-agrippantes, des crochets ou analogues, selon le type d'éléments de fixation (3).

11. Poche de transport selon l'une des revendications 1 à 8, **caractérisée en ce que** les points de fixation (4) propres à l'objet sont des œillets, des saillies, etc.

12. Poche de transport selon l'une des revendications 1 à 9, **caractérisée en ce que** la poche de transport (1) comprend un matériau incassable, le matériau pouvant être des textiles, des films opaques ou transparents, mais également des tissus filetés.

13. Véhicule comprenant une poche de transport selon l'une des revendications 1 à 12.
